# EUROPEAN PATENT APPLICATION

(11) **EP 4 674 597 A1**
(43) Date of publication of application: **07.01.2026**
(21) Application number: 23932143.3
(22) Date of filing: 16.11.2023
(51) Int. Cl.: B29C 55/16

(54) **DRAWING MACHINE, RAIL, PARTIAL RAIL, AND OIL FILM FORMATION METHOD**

(30) Priority: 04.04.2023 JP 2023060908
(71) Applicant: The Japan Steel Works, Ltd., Tokyo 141-0032 (JP)
(72) Inventor: KATO, Masaki, Tokyo 141-0032 (JP); NAKAJIMA, Ichiro, Tokyo 141-0032 (JP)
(74) Representative: Simmons & Simmons LLP (Munich)
(86) International application number: PCT/JP2023/041372
(87) International publication number: WO 2024/209734

(57) **Abstract**

A drawing machine according to one embodiment of the present invention has: a rail; and a link mechanism including a plurality of rollers that move while being brought into contact with a side surface of the rail. An oil passage 50 is provided inside a partial rail 14a constituting the rail, and a plurality of discharge ports 60 are provided in a surface of the partial rail 14a. The oil passage 50 includes a main oil passage 51 and a plurality of branch oil passages extending obliquely to the main oil passage 51 from two or more different positions of the main oil passage 51. A lubricating oil supplied to the main oil passage 51 is sent to the plurality of discharge ports 60 via the plurality of branch oil passages.

## Description

### TECHNICAL FIELD

The present invention relates to a stretching machine.

### BACKGROUND ART

A stretching machine configured to stretch a thin film (for example, resin sheet or resin film) in a longitudinal direction and a transverse direction while conveying it has been known. Patent Document 1 discloses a simultaneous biaxial stretching machine in which longitudinal stretching and transverse stretching of a sheet-like material are performed. The simultaneous biaxial stretching machine disclosed in Patent Document 1 includes endless link devices. The endless link device is made up of rails and a plurality of equal-length link units moving along the rails, and each equal-length link unit includes rollers moving on the rails while rotating.

### RELATED ART DOCUMENTS

### PATENT DOCUMENTS

Patent Document 1: Japanese Patent No. 4379306

### SUMMARY OF THE INVENTION

### PROBLEMS TO BE SOLVED BY THE INVENTION

It is required to suppress wear of the rails in order to extend the service life of the stretching machine.

Other objects and novel features will be apparent from the description of this specification and the accompanying drawings.

### MEANS FOR SOLVING THE PROBLEMS

A stretching machine according to one embodiment includes a rail and link mechanisms each provided with a plurality of rollers moving while being in contact with side surfaces of the rail. An oil passage is provided inside the rail, and a plurality of discharge ports are provided on a surface of the rail. The oil passage includes a main oil passage and a plurality of branch oil passages extending obliquely with respect to the main oil passage from two or more different locations on the main oil passage, and lubricating oil supplied to the main oil passage is sent to the plurality of discharge ports through the plurality of branch oil passages.

### EFFECTS OF THE INVENTION

In the stretching machine according to one embodiment, it is possible to suppress wear of the rails and extend the service life.

### BRIEF DESCRIPTIONS OF THE DRAWINGS

[FIG. 1] is a schematic view showing a configuration of a thin-film manufacturing system according to one embodiment.
[FIG. 2] is a plan view schematically showing a structure of a stretching machine constituting the thin-film manufacturing system according to one embodiment.
[FIG. 3] is another plan view schematically showing the structure of the stretching machine constituting the thin-film manufacturing system according to one embodiment.
[FIG. 4A] is a plan view schematically showing part of link mechanisms and rails according to one embodiment.
[FIG. 4B] is another plan view schematically showing part of the link mechanisms and the rails according to one embodiment.
[FIG. 5] is a perspective view showing some link mechanisms in an enlarged manner according to one embodiment.
[FIG. 6] is a perspective view of a partial rail according to one embodiment.
[FIG. 7] is a plan view of the partial rail according to one embodiment.
[FIG. 8] is a side view of the partial rail according to one embodiment.
[FIG. 9] is an end view of the partial rail according to one embodiment.
[FIG. 10] is an explanatory diagram schematically showing an oil passage according to one embodiment.
[FIG. 11] is a perspective view showing a modification of the partial rail.

### DETAILED DESCRIPTION OF PREFERRED EMBODIMENTS

Hereinafter, one embodiment will be described in detail with reference to the drawings. Note that the devices and members having the same or substantially the same function are denoted by the same reference characters throughout the drawings referenced for describing the embodiment. Also, the descriptions for the devices and members that have been once described will not be repeated in principle.

### <Configuration of Thin-Film Manufacturing System>

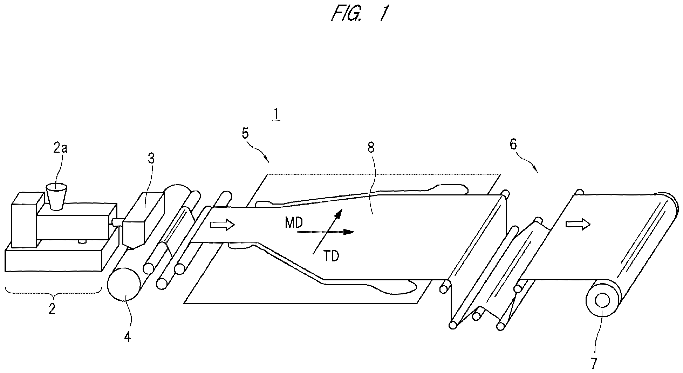

FIG. 1 is a schematic view showing a configuration of a thin-film manufacturing system 1 according to the present embodiment. The thin-film manufacturing system 1 includes an extrusion apparatus (extruder, kneading extruder) 2, a T-die 3, a raw sheet cooling apparatus 4, a stretching machine 5, a take-off apparatus 6, and a winder apparatus 7.

In the thin-film manufacturing system 1 according to the present embodiment, a resin film is manufactured through the following process. First, a raw material is supplied to the extrusion apparatus 2. More specifically, a resin material (for example, thermoplastic resin material in pellet shape) is supplied to a material supply unit (material supply port, hopper) 2a of the extrusion apparatus 2.

The raw material supplied to the extrusion apparatus 2 is conveyed while being kneaded (mixed). More specifically, the raw material supplied to the extrusion apparatus 2 is melted and kneaded while being sent forward by the rotation of a screw in the extrusion apparatus 2.

The raw material kneaded by the extrusion apparatus 2 (kneaded material) is fed to the T-die 3. The kneaded material fed to the T-die 3 passes through the T-die 3 and is extruded toward the raw sheet cooling apparatus 4 through a slit of the T-die 3. The kneaded material is formed into a desired shape (in this case, film-like shape) by passing through the T-die 3.

The kneaded material is continuously extruded from the T-die 3 toward the raw sheet cooling apparatus 4. The kneaded material extruded from the T-die 3 is cooled in the raw sheet cooling apparatus 4 to be a resin film 8. Then, the resin film 8 is supplied to the stretching machine 5.

The resin film 8 supplied to the stretching machine 5 is stretched in an MD direction and a TD direction by the stretching machine 5. The resin film 8 subjected to a stretching process (stretching treatment) by the stretching machine 5 is conveyed to the winder apparatus 7 via the take-off apparatus 6 and is wound by the winder apparatus 7. The resin film 8 wound by the winder apparatus 7 is cut as needed.

The thin-film manufacturing system 1 manufactures the resin film 8 through the process described above. Understandably, the thin-film manufacturing system 1 can be modified in various ways in accordance with the properties and the like of the resin film to be manufactured. For example, an extraction tank may be installed near the take-off apparatus 6 shown in FIG. 1, and a plasticizer (for example, paraffin) contained in the resin film 8 may be removed in another embodiment.

The stretching machine 5 constituting the thin-film manufacturing system 1 stretches the resin film 8 in the MD direction and the TD direction while conveying the resin film 8 in the MD direction. In other words, the MD (Machine Direction) direction is a conveying direction of the resin film 8. Also, the TD (Transverse Direction) direction is a direction that intersects the conveying direction of the resin film 8. Thus, in the following description, the MD direction is referred to as a "conveying direction" or a "longitudinal direction", and the TD direction is referred to as a "transverse direction" in some cases.

The MD direction (conveying direction, longitudinal direction) and the TD direction (transverse direction) are the directions intersecting each other, and are more specifically the directions orthogonal to each other. Namely, the stretching machine 5 is a stretching machine capable of simultaneously stretching the resin film 8 in two directions intersecting each other while conveying the resin film 8, and is referred to as a "simultaneous biaxial stretching machine" in general.

### <Stretching Machine>

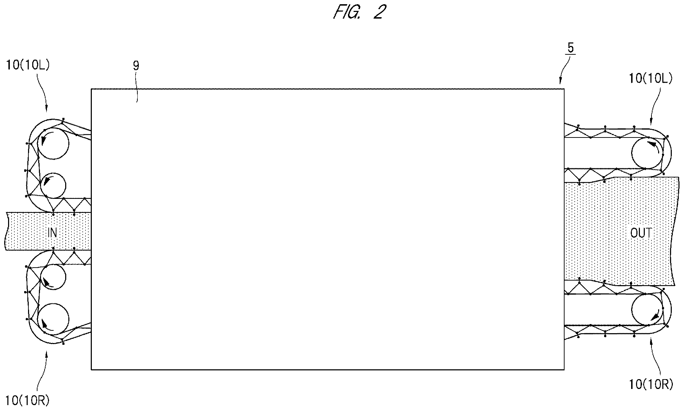

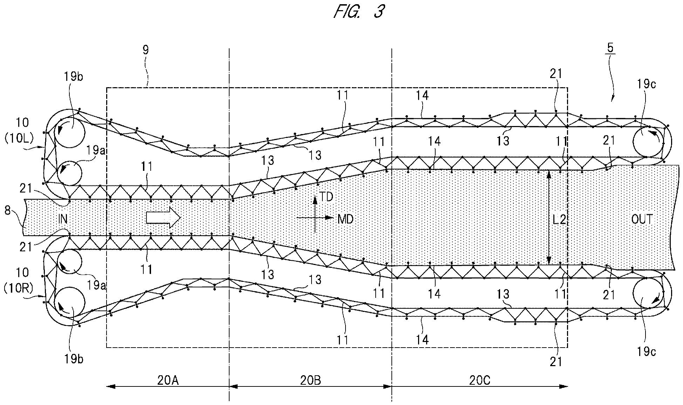

Next, the stretching machine 5 will be described in more detail. FIG. 2 and FIG. 3 are plan views schematically showing the structure of the stretching machine 5. The stretching machine 5 has a pair of link devices 10. The pair of link devices 10 are separated from each other in plan view. In the following description, one of the pair of link devices 10 is referred to as a "link device 10R" and the other of the pair of link devices 10 is referred to as a "link device 10L" for distinction in some cases. Understandably, such a distinction is merely for convenience of description.

In FIG. 2 and FIG. 3, the link device 10R is disposed on a right side (R side) with respect to the conveying direction (MD direction), and the link device 10L is disposed on a left side (L side) with respect to the conveying direction (MD direction). Further, the link device 10R and the link device 10L are separated from each other in the TD direction and face each other with the resin film 8 interposed therebetween.

The resin film 8 is conveyed through the space between the link device 10R and the link device 10L in the MD direction. From another perspective, the space between the link device 10R and the link device 10L facing each other is used as a conveyance path for conveying the resin film 8.

Referring to FIG. 3, the stretching machine 5 is divided into three regions 20A, 20B, and 20C along the conveying direction (MD direction). The region 20A serves as a preheating region (preheat zone), the region 20B serves as a stretching region, and the region 20C serves as a heat setting region. The preheating region 20A, the stretching region 20B, and the heat setting region 20C are arranged in this order in the conveying direction (MD direction).

A portion indicated by "IN" in FIG. 2 and FIG. 3 is an inlet of the resin film 8 in the stretching machine 5, and is located in the preheating region 20A. Also, a portion indicated by "OUT" in FIG. 2 and FIG. 3 is an outlet of the resin film 8 in the stretching machine 5, and is located in the heat setting region 20C. Further, the stretching region 20B in which the stretching process is performed is located between the preheating region 20A in which the inlet of the resin film 8 is present and the heat setting region 20C in which the outlet of the resin film 8 is present.

A heat treatment unit 9 covers a part of the preheating region 20A, all of the stretching region 20B, and a part of the heat setting region 20C. Also, the heat treatment unit 9 covers the central parts of the link devices 10R and 10L, and heats the resin film 8 conveyed by the link devices 10R and 10L. The heat treatment unit 9 in the present embodiment is composed of an oven capable of heating the resin film 8 to a desired temperature. The resin film 8 passes through the inside of the oven as the heat treatment unit 9 while being gripped by the link devices 10R and 10L.

### <Link Device>

Each of the link devices 10R and 10L includes a plurality of link mechanisms 11 coupled to constitute endless chains, and each of the link mechanisms 11 is provided with a clip 21 configured to grip the resin film 8. The resin film 8 is held by the clips 21 of the link mechanisms 11 constituting the link device 10R and the clips 21 of the link mechanisms 11 constituting the link device 10L. Specifically, one side (right side/R side) of the resin film 8 is gripped by the plurality of clips 21 in the link device 10R, and the other side (left side/L side) of the resin film 8 is gripped by the plurality of clips 21 in the link device 10L.

Each of the link devices 10R and 10L includes a pair of rails 13 and 14 disposed on a support table (bed) in addition to the plurality of link mechanisms 11. The rail 13 of each of the link devices 10R and 10L is disposed on an inner side of the rail 14 of each of the link devices 10R and 10L. In other words, the rail 14 of each of the link devices 10R and 10L is disposed on an outer side of the rail 13 of each of the link devices 10R and 10L.

Thus, the rail 13 is referred to as an "inner rail", and the rail 14 is referred to as an "outer rail" in some cases. Furthermore, the rail 13 is referred to also as a "reference rail" or an "SP rail", and the rail 14 is referred to also as an "MD rail" in some cases.

The rails 13 and 14 provided in each of the link devices 10R and 10L are made up of a plurality of partial rails coupled to each other, and are annularly disposed over the preheating region 20A, the stretching region 20B, and the heat setting region 20C. More specifically, the rails 13 and 14 form an annular travel path by being turned back in the preheating region 20A where the inlet of the resin film 8 is present and in the heat setting region 20C where the outlet of the resin film 8 is present. The rails 13 and 14 will be described later again.

Three sprockets 19a, 19b, and 19c are provided on the inner side of the rail 13 of the link device 10R. Similarly, three sprockets 19a, 19b, and 19c are provided on the inner side of the rail 13 of the link device 10L.

The sprockets 19a and 19b of each of the link devices 10R and 10L are disposed in the preheating region 20A, and the sprocket 19c of each of the link devices 10R and 10L is disposed in the heat setting region 20C. Understandably, the sprockets 19a and 19b are disposed outside the heat treatment unit 9 that covers a part of the preheating region 20A. Further, the sprockets 19c are disposed outside the heat treatment unit 9 that covers a part of the heat setting region 20C. In other words, the sprockets 19a, 19b, and 19c of each of the link devices 10R and 10L are disposed outside the oven.

The plurality of link mechanisms 11 in the link devices 10R and 10L are disposed on the rails 13 and 14 and move along the rails 13 and 14. In other words, the link mechanisms 11 run on the rails 13 and 14.

More specifically, when the sprockets 19a, 19b, and 19c of the link device 10R rotate, a driving force acts on the plurality of link mechanisms 11 of the link device 10R, and these link mechanisms 11 move (run) on the rails 13 and 14. Further, when the sprockets 19a, 19b, and 19c of the link device 10L rotate, a driving force acts on the plurality of link mechanisms 11 of the link device 10L, and these link mechanisms 11 move (run) on the rails 13 and 14.

In other words, the rails 13 and 14 in the link devices 10R and 10L are guide rails configured to move (run) the plurality of link mechanisms 11.

In the following description, for each of the link devices 10R and 10L shown in FIG. 3, the side facing the resin film 8 is referred to as a "film side", and the side opposite to the film side is referred to as a "return side" in some cases. Specifically, the side on which the plurality of link mechanisms 11 move from the inlet (IN) toward the outlet (OUT) while the clips 21 are gripping the resin film 8 is the film side. Meanwhile, the side which is located on the opposite side of the film side and on which the plurality of link mechanisms 11 move from the outlet (OUT) toward the inlet (IN) while the clips 21 do not grip the resin film 8 is the return side.

A pitch between adjacent link mechanisms 11 (referred to also as "link pitch" in some cases) changes in accordance with an interval (separation distance) between the rail 13 and the rail 14. In other words, the pitch between the adjacent link mechanisms 11 can be adjusted by adjusting the separation distance between the rail 13 and the rail 14.

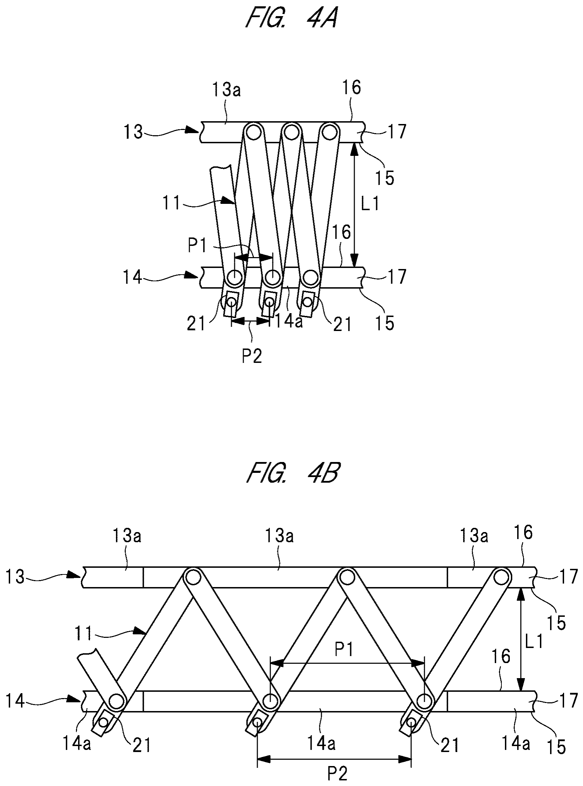

FIG. 4A and FIG. 4B are plan views schematically showing part of the link mechanisms 11 and the rails 13 and 14. As shown in FIG. 4A and FIG. 4B, the angle formed by the adjacent link mechanisms 11 becomes larger and the pitch P1 between the adjacent link mechanisms 11 becomes larger as the separation distance L1 between the rails 13 and 14 becomes smaller. On the other hand, the angle formed by the adjacent link mechanisms 11 becomes smaller and the pitch P1 between the adjacent link mechanisms 11 becomes smaller as the separation distance L1 between the rails 13 and 14 becomes larger.

As described above, each link mechanism 11 has the clip 21 configured to grip the resin film 8. Therefore, the pitch P2 between the adjacent clips 21 also increases and decreases in accordance with the increase and decrease of the pitch P1 between the adjacent link mechanisms 11. Specifically, the pitch P1 between the link mechanisms 11 increases when the separation distance L1 between the rails 13 and 14 decreases, and the pitch P2 between the clips 21 also increases when the pitch P1 between the link mechanisms 11 increases (FIG. 4A → FIG. 4B). On the other hand, the pitch P1 between the link mechanisms 11 decreases when the separation distance L1 between the rails 13 and 14 increases, and the pitch P2 between the clips 21 also decreases when the pitch P1 between the link mechanisms 11 decreases (FIG. 4B → FIG. 4A).

Note that each of the plurality of link mechanisms 11 includes the clip 21. Therefore, the pitch P1 between the two adjacent link mechanisms 11 and the pitch P2 between the two clips 21 provided in these link mechanisms 11 are the same. That is, P1=P2 holds in each of FIG. 4A and FIG. 4B.

### <Operation of Stretching Machine>

The resin film 8 supplied from the raw sheet cooling apparatus 4 to the stretching machine 5 shown in FIG. 1 is held by the link devices 10R and 10L at the inlet of the stretching machine 5. More specifically, the resin film 8 is gripped by the clips 21 in the link mechanisms 11 of the link devices 10R and 10L shown in FIG. 2 and FIG. 3. In other words, one side of the resin film 8 in the width direction is gripped by the clips 21 in the link mechanisms 11 constituting the link device 10R, and the other side of the resin film 8 in the width direction is gripped by the clips 21 in the link mechanisms 11 constituting the link device 10L.

The resin film 8 whose both sides in the width direction are gripped by the clips 21 is conveyed from the inlet to the outlet of the stretching machine 5 along with the movement of the link mechanisms 11, and passes through the preheating region 20A, the stretching region 20B, and the heat setting region 20C in this order. The resin film 8 is stretched in the MD direction and the TD direction while passing through the stretching region 20B. Thereafter, the stretched resin film 8 reaches the outlet through the heat setting region 20C and is released from the clips 21. The resin film 8 released from the clips 21 is conveyed to the take-off apparatus 6 and is further conveyed from the take-off apparatus 6 to the winder apparatus 7.

As shown in FIG. 3, in the preheating region 20A, the interval (separation distance in the TD direction) L2 between the rails 13 and 14 of the link device 10R and the rails 13 and 14 of the link device 10L is almost constant. Therefore, the width (dimension in the TD direction) of the resin film 8 does not change and remains constant in the preheating region 20A.

Also, in the preheating region 20A, the interval (separation distance) L1 between the rail 13 and the rail 14 of the link device 10R on the film side is almost constant. Therefore, in the preheating region 20A, the pitch P1 between the link mechanisms 11 of the link device 10R on the film side is almost constant, and thus the pitch P2 between the clips 21 of the link device 10R on the film side is also almost constant. Further, in the preheating region 20A, the interval (separation distance) L1 between the rail 13 and the rail 14 of the link device 10L on the film side is almost constant. Therefore, in the preheating region 20A, the pitch P1 between the link mechanisms 11 of the link device 10L on the film side is almost constant, and thus the pitch P2 between the clips 21 of the link device 10L on the film side is also almost constant. Therefore, the length (dimension in the MD direction) of the resin film 8 does not change and remains constant in the preheating region 20A.

In other words, the resin film 8 is not stretched in either the TD direction or the MD direction in the preheating region 20A. From another perspective, neither the stretching process for the resin film 8 in the TD direction nor the stretching process for the resin film 8 in the MD direction is performed in the preheating region 20A.

In the stretching region 20B, the interval (separation distance in the TD direction) L2 between the rails 13 and 14 of the link device 10R and the rails 13 and 14 of the link device 10L gradually increases as advancing in the conveying direction (MD direction). Therefore, in the stretching region 20B, the resin film 8 is pulled and stretched in the TD direction as it advances in the conveying direction (MD direction). In other words, in the stretching region 20B, the width (dimension in the TD direction) of the resin film 8 gradually increases as it advances in the conveying direction (MD direction).

Also, in the stretching region 20B, the interval (separation distance) L1 between the rail 13 and the rail 14 of the link device 10R on the film side gradually decreases and the interval (separation distance) L1 between the rail 13 and the rail 14 of the link device 10L on the film side also gradually decreases as advancing in the conveying direction (MD direction) . Therefore, in the stretching region 20B, the pitch P1 between the link mechanisms 11 of the link device 10R on the film side gradually increases as advancing in the conveying direction (MD direction), and thus the pitch P2 between the clips 21 of the link device 10R on the film side also gradually increases. Further, in the stretching region 20B, the pitch P1 between the link mechanisms 11 of the link device 10L on the film side gradually increases as advancing in the conveying direction (MD direction), and thus the pitch P2 between the clips 21 of the link device 10L on the film side also gradually increases. As a result, in the stretching region 20B, the resin film 8 is pulled and stretched in the MD direction as it advances in the conveying direction (MD direction).

In other words, in the stretching region 20B, the resin film 8 is stretched in the TD direction and the MD direction. From another perspective, in the stretching region 20B, the stretching process in the TD direction and the stretching process in the MD direction are performed for the resin film 8.

In the heat setting region 20C, the interval (separation distance in the TD direction) L2 between the rails 13 and 14 of the link device 10R and the rails 13 and 14 of the link device 10L is almost constant.

Further, in the heat setting region 20C, the interval (separation distance) L1 between the rail 13 and the rail 14 of the link device 10R on the film side is almost constant. Therefore, in the heat setting region 20C, the pitch P1 between the link mechanisms 11 of the link device 10R on the film side is almost constant, and thus the pitch P2 between the clips 21 of the link device 10R on the film side is also almost constant. Further, in the heat setting region 20C, the interval (separation distance) L1 between the rail 13 and the rail 14 of the link device 10L on the film side is also almost constant. Therefore, in the heat setting region 20C, the pitch P1 between the link mechanisms 11 of the link device 10L on the film side is also almost constant, and thus the pitch P2 between the clips 21 of the link device 10L on the film side is also almost constant.

Therefore, the resin film 8 is not stretched in either the TD direction or the MD direction in the heat setting region 20C. From another perspective, neither the stretching process for the resin film 8 in the TD direction nor the stretching process for the resin film 8 in the MD direction is performed in the heat setting region 20C.

As described above, in the preheating region 20A, the interval (separation distance in the TD direction) L2 between the rails 13 and 14 of the link device 10R and the rails 13 and 14 of the link device 10L is almost constant. Thereafter, in the stretching region 20B, the interval (separation distance in the TD direction) L2 between the rails 13 and 14 of the link device 10R and the rails 13 and 14 of the link device 10L gradually increases. Then, in the heat setting region 20C, the interval (separation distance in the TD direction) L2 between the rails 13 and 14 of the link device 10R and the rails 13 and 14 of the link device 10L is kept constant again. In other words, the interval (separation distance in the TD direction) L2 between the rails 13 and 14 of the link device 10R and the rails 13 and 14 of the link device 10L becomes maximum in the heat setting region 20C.

### <Configuration of Link Mechanism>

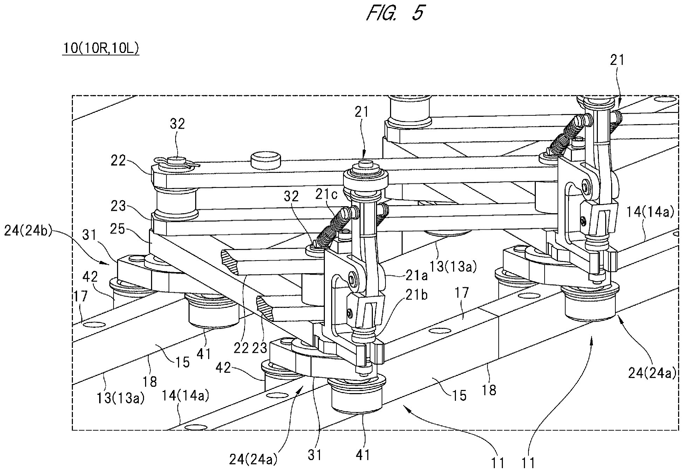

FIG. 5 is a perspective view showing some link mechanisms 11 constituting the link device 10 in an enlarged manner. Each of the link mechanisms 11 includes an upper link plate 22 and a lower link plate 23 in addition to the clip 21. Also, each of the link mechanisms 11 includes an outer rail holder 24a and an inner rail holder 24b, and these are coupled via a base member 25.

The outer rail holder 24a is disposed on the rail 14 and moves (runs) along the rail 14. On the other hand, the inner rail holder 24b is disposed on the rail 13 and moves (runs) along the rail 13.

In the following description, the outer rail holder 24a and the inner rail holder 24b are collectively referred to as "rail holders 24" when no particular distinction is made between them.

### <Rail Holder>

The rail holder 24 includes a roller holding portion 31 and a shaft 32 provided at the center of the roller holding portion 31 in the longitudinal direction. The roller holding portion 31 of the outer rail holder 24a is disposed on the rail 14 so as to straddle the rail 14. As a result, one end of the roller holding portion 31 disposed on the rail 14 in the longitudinal direction protrudes toward the outer side of the rail 14, and the other end of the roller holding portion 31 in the longitudinal direction protrudes toward the inner side of the rail 14 (side facing the rail 13).

On the other hand, the roller holding portion 31 of the inner rail holder 24b is disposed on the rail 13 so as to straddle the rail 13. As a result, one end of the roller holding portion 31 disposed on the rail 13 in the longitudinal direction protrudes toward the outer side of the rail 13 (side facing the rail 14), and the other end of the roller holding portion 31 in the longitudinal direction protrudes toward the inner side of the rail 13.

The shaft 32 of the outer rail holder 24a penetrates one ends (base ends) of the upper link plate 22, the lower link plate 23, and the base member 25 in the longitudinal direction. From another perspective, the base ends of the upper link plate 22, the lower link plate 23, and the base member 25 are rotatably coupled with each other by the shaft 32 of the outer rail holder 24a.

On the other hand, the shaft 32 of the inner rail holder 24b penetrates the other end (tip end) of the base member 25 in the longitudinal direction and protrudes from the base member 25. The shaft 32 of the inner rail holder 24b protruding from the base member 25 penetrates one ends (tip ends) of the upper link plate 22 and the lower link plate 23 of another adjacent link mechanism 11 in the longitudinal direction. From another perspective, the tip end of the base member 25 of one link mechanism 11 and the tip ends of the upper link plate 22 and the lower link plate 23 of another adjacent link mechanism 11 are rotatably coupled with each other by the shaft 32 of the inner rail holder 24b.

In other words, the shaft 32 of the outer rail holder 24a is a rotating axis on the base end side of the upper link plate 22, the lower link plate 23, and the base member 25. Also, the shaft 32 of the inner rail holder 24b is a rotating axis on tip end side of the upper link plate 22, the lower link plate 23, and the base member 25.

From another perspective, the base ends of the upper link plate 22, the lower link plate 23, and the base member 25 are rotatably supported by the outer rail holder 24a, and the tip ends of the upper link plate 22, the lower link plate 23, and the base member 25 are rotatably supported by the inner rail holder 24b.

### <Clip>

The clip 21 is provided at the base end of the base member 25 of each link mechanism 11. The clip 21 includes a main body portion 21a, a grip portion 21b, a spring portion 21c, and others. The main body portion 21a is fixed to the base end of the base member 25. The grip portion 21b is attached to the main body portion 21a so as to be movable in an up-down direction. The spring portion 21c biases the grip portion 21b so as to operate the grip portion 21b downward. By making the grip portion 21b operate downward by the biasing force of the spring portion 21c, the resin film 8 is sandwiched between the main body portion 21a and the grip portion 21b. Specifically, the resin film 8 is gripped by the clip 21. On the other hand, by making the grip portion 21b operate upward against the biasing force of the spring portion 21c, the resin film 8 is released from the clip 21.

### <Roller Holding Portion>

The roller holding portion 31 of each rail holder 24 is rotatably attached to the lower end of the shaft 32 protruding downward from the base member 25. More specifically, the roller holding portion 31 is attached to the lower end of the shaft 32 via bearings.

As described above, the roller holding portion 31 of the outer rail holder 24a protrudes toward both sides of the rail 14 while straddling the rail 14. On the other hand, the roller holding portion 31 of the inner rail holder 24b protrudes toward both sides of the rail 13 while straddling the rail 13.

A shaft (roller shaft) is provided at one end of the roller holding portion 31 of the outer rail holder 24a protruding toward the outer side of the rail 14. Also, another shaft (another roller shaft) is provided at the other end of the roller holding portion 31 of the outer rail holder 24a protruding toward the inner side of the rail 14. An upper portion of each roller shaft is press-fitted into a mounting hole provided in the roller holding portion 31.

Similarly, a shaft (roller shaft) is provided at one end of the roller holding portion 31 of the inner rail holder 24b protruding toward the outer side of the rail 13. Also, another shaft (another roller shaft) is provided at the other end of the roller holding portion 31 of the inner rail holder 24b protruding toward the inner side of the rail 13. An upper portion of each roller shaft is press-fitted into a mounting hole provided in the roller holding portion 31.

### <Guide Roller>

The rail holder 24 has a plurality of rollers moving along the rails 13 and 14. More specifically, a pair of guide rollers 41 and 42 facing each other with the rail 14 interposed therebetween are rotatably provided below the roller holding portion 31 of the outer rail holder 24a. Similarly, a pair of guide rollers 41 and 42 facing each other with the rail 13 interposed therebetween are rotatably provided below the roller holding portion 31 of the inner rail holder 24b. Each of the guide rollers 41 and 42 has a cylindrical shape with openings at both ends in the axial direction, and a flange is integrally formed at an upper end thereof.

The guide roller 41 of the outer rail holder 24a is rotatably attached to the lower portion of the roller shaft protruding toward the lower side from one side of the roller holding portion 31. The guide roller 42 of the outer rail holder 24a is rotatably attached to the lower portion of another roller shaft protruding toward the lower side from the other side of the roller holding portion 31.

In other words, the two guide rollers 41 and 42 of the outer rail holder 24a are rotatably held by the roller holding portion 31. Then, the guide roller 41 moves on the outer side of the rail 14 while being in contact with one side surface (outer side surface 15) of the rail 14, and the guide roller 42 moves on the inner side of the rail 14 while being in contact with the other side surface (inner side surface 16) of the rail 14.

The guide roller 41 of the inner rail holder 24b is rotatably attached to the lower portion of the roller shaft protruding toward the lower side from one side of the roller holding portion 31. The guide roller 42 of the inner rail holder 24b is rotatably attached to the lower portion of another roller shaft protruding toward the lower side from the other side of the roller holding portion 31.

In other words, the two guide rollers 41 and 42 of the inner rail holder 24b are rotatably held by the roller holding portion 31. Then, the guide roller 41 moves on the outer side of the rail 13 while being in contact with one side surface (outer side surface 15) of the rail 13, and the guide roller 42 moves on the inner side of the rail 13 while being in contact with the other side surface (inner side surface 16) of the rail 13.

### <Rail>

As described above, the guide rollers 41 and 42 of the link mechanisms 11 move while being in contact with the side surfaces of the rails 13 and 14. Therefore, the rails 13 and 14 gradually wear due to the contact with the guide rollers 41 and 42. For this reason, it is necessary to replace all or part of the rails 13 and 14 periodically or as necessary. From another perspective, if the wear of the rails 13 and 14 can be suppressed, the service life of the stretching machine 5 including the link mechanisms 11 can be extended.

Therefore, the rails 13 and 14 of the present embodiment have a structure in which the oil film forming method can be implemented. In the oil film forming method of the present embodiment, lubricating oil for forming an oil film on the surfaces of the rails 13 and 14 (in particular, the outer side surface 15 and inner side surface 16 with which the guide rollers 41 and 42 come into contact) is supplied to the rails 13 and 14. The lubricating oil supplied to the rails 13 and 14 is sent to a plurality of discharge ports provided on the surfaces of the rails 13 and 14 through oil passages provided inside the rails 13 and 14, and overflows from these discharge ports. The lubricating oil overflowing from the discharge ports spreads over the surfaces of the rails 13 and 14 to form an oil film.

Note that the rails 13 and 14 have the same structure at least in relation to the implementation of the oil film forming method. Therefore, by describing the structure of the rail 14, the structure of the rail 13 will also be clarified.

### <Partial Rail>

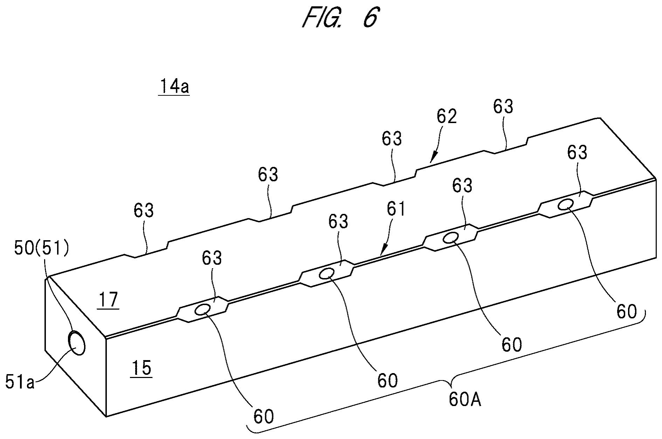

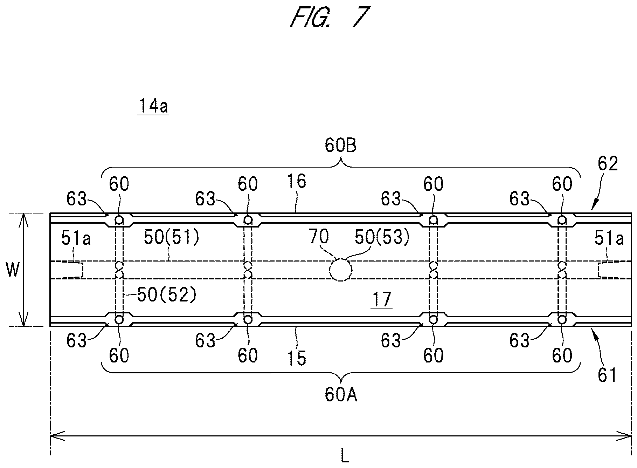

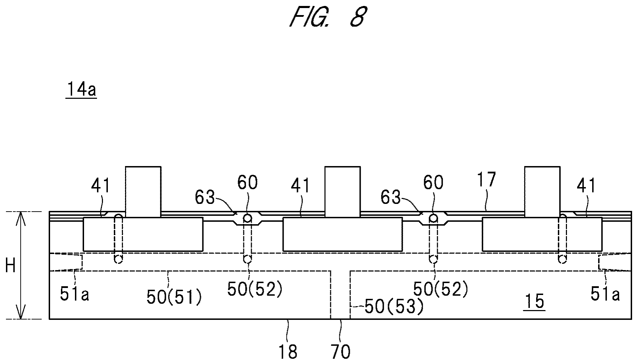

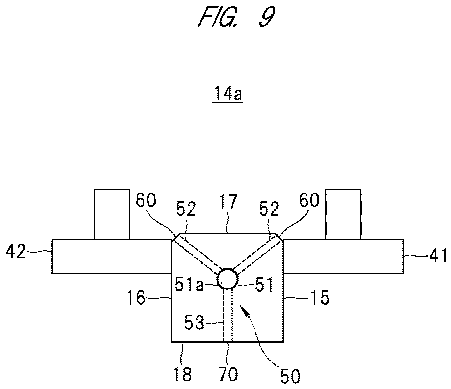

FIG. 6 is a perspective view of a partial rail 14a constituting the rail 14. FIG. 7 is a plan view of the partial rail 14a, FIG. 8 is a side view of the partial rail 14a, and FIG. 9 is an end view of the partial rail 14a. Note that the illustrations of the guide rollers 41 and 42 shown in FIG. 8 and FIG. 9 are omitted in FIG. 6 and FIG. 7.

As described above, the rail 14 is formed in an annular shape across the preheating region 20A, the stretching region 20B, and the heat setting region 20C by the plurality of coupled partial rails 14a. The partial rail 14a shown in FIG. 6 to FIG. 9 is one of the partial rails disposed in the heat setting region 20C. In other words, the partial rail 14a shown in FIG. 6 to FIG. 9 is one of the partial rails that form a section of the rail 14 (section of the heat setting region).

The length L of the partial rail 14a shown in FIG. 7 is 1200 mm, and the width W is 38 mm. Also, the height H of the partial rail 14a shown in FIG. 8 is 30 mm. Understandably, the dimensions of the partial rail 14a are not particularly limited and can be changed as appropriate.

### <Oil Passage>

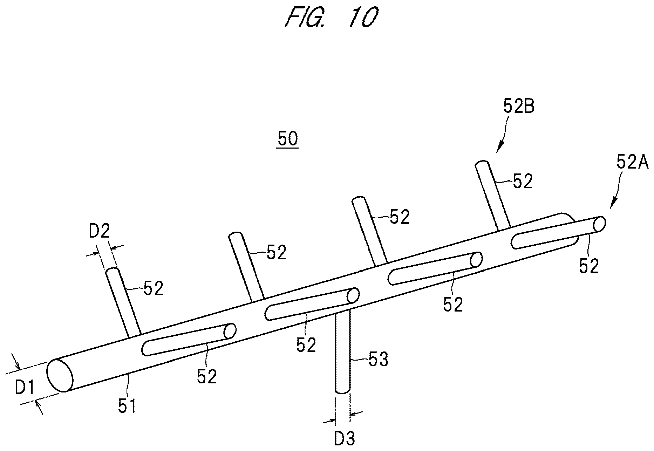

An oil passage 50 is provided inside the partial rail 14a. FIG. 10 is an explanatory diagram schematically showing the oil passage 50 provided inside the partial rail 14a.

The oil passage 50 includes a main oil passage 51, a plurality of branch oil passages 52, and an oil supply passage 53. More specifically, the oil passage 50 is made up of one main oil passage 51, eight branch oil passages 52, and one oil supply passage 53.

The main oil passage 51 is formed of a through hole that penetrates the partial rail 14a in its longitudinal direction. As a result, one end of the main oil passage 51 is open on one end surface of the partial rail 14a, and the other end of the main oil passage 51 is open on the other end surface of the partial rail 14a. Understandably, set screws 51a with holes are attached to both ends of the main oil passage 51. In other words, both ends of the main oil passage 51 are blocked.

The branch oil passages 52 are respectively formed of a plurality of through holes extending obliquely upward from two or more different positions of the main oil passage 51. In other words, each branch oil passage 52 communicates with the main oil passage 51. Furthermore, four branch oil passages 52 are arranged on one side of the main oil passage 51 to form a branch oil passage group 52A. Meanwhile, the other four branch oil passages 52 are arranged on the other side of the main oil passage 51 to form a branch oil passage group 52B.

The oil supply passage 53 is formed of a through hole that extends downward from the center or approximately the center of the main oil passage 51. In other words, the oil supply passage 53 communicates with the main oil passage 51.

### <Discharge Port>

A plurality of discharge ports 60 are provided on the surface of the partial rail 14a. More specifically, eight discharge ports 60 are provided on the surface of the partial rail 14a. Some discharge ports 60 are arranged on one side of the partial rail 14a in the width direction, and the other discharge ports 60 are arranged on the other side of the partial rail 14a in the width direction.

More specifically, four discharge ports 60 are provided at a corner 61 between the outer side surface 15 and an upper surface 17 of the partial rail 14a. In addition, the other four discharge ports 60 are provided at a corner 62 between the inner side surface 16 and the upper surface 17 of the partial rail 14a.

The four discharge ports 60 provided at the corner 61 are arranged in a row along the longitudinal direction of the partial rail 14a to form a discharge port group 60A. In addition, the four discharge ports 60 provided at the corner 62 are arranged in a row along the longitudinal direction of the partial rail 14a to form a discharge port group 60B.

From another perspective, discharge port rows made up of the plurality of discharge ports 60 arranged along the longitudinal direction of the partial rail 14a are provided at the two corners 61 and 62 of the partial rail 14a.

The branch oil passages 52 belonging to the branch oil passage group 52A communicate with the discharge ports 60 belonging to the discharge port group 60A. Also, the branch oil passages 52 belonging to the branch oil passage group 52B communicate with the discharge ports 60 belonging to the discharge port group 60B.

From another perspective, the discharge ports 60 belonging to the discharge port group 60A are connected to the main oil passage 51 via the branch oil passages 52 belonging to the branch oil passage group 52A. Also, the discharge ports 60 belonging to the discharge port group 60B are connected to the main oil passage 51 via the branch oil passages 52 belonging to the branch oil passage group 52B.

### <Supply Port>

A supply port 70 is provided on the surface of the partial rail 14a. More specifically, the supply port 70 is provided on a lower surface 18 of the partial rail 14a, and the oil supply passage 53 communicates with the supply port 70. From another perspective, the supply port 70 is connected to the main oil passage 51 via the oil supply passage 53.

Note that, in FIG. 10, the diameter D1 of the main oil passage 51 is 4.0 mm, the diameter D2 of the branch oil passage 52 is 1.5 mm, and the diameter D3 of the oil supply passage 53 is 6.0 mm. Understandably, the diameters of the main oil passage 51, the branch oil passages 52, and the oil supply passage 53 are not particularly limited and can be changed as appropriate.

The lubricating oil supplied to the supply port 70 is sent (distributed) to each discharge port 60 through the oil passage 50 provided inside the partial rail 14a. More specifically, the lubricating oil supplied to the supply port 70 flows into the center or approximately the center of the main oil passage 51 through the oil supply passage 53. A part of the lubricating oil that has flown into the main oil passage 51 flows toward one end of the main oil passage 51, and another part of the lubricating oil that has flown into the main oil passage 51 flows toward the other end of the main oil passage 51. As a result, the main oil passage 51 is filled with the lubricating oil.

Then, the lubricating oil that has filled the inside of the main oil passage 51 flows into the plurality of branch oil passages 52 and reaches the discharge ports 60 with which the respective branch oil passages 52 communicate. The lubricating oil that has reached the discharge ports 60 overflows outside the discharge ports 60.

In the present embodiment, the plurality of discharge ports 60 are provided at the corners 61 and 62 between the side surfaces (outer side surface 15, inner side surface 16) and the upper surface 17 of the partial rail 14a. From another perspective, each discharge port 60 is provided at or near the upper end of the outer side surface 15 or inner side surface 16 of the partial rail 14a. Therefore, the lubricating oil that has overflown from the discharge ports 60 flows down on the outer side surface 15 and the inner side surface 16 toward the lower ends thereof. As a result, an oil film is formed on the outer side surface 15 and the inner side surface 16.

Furthermore, in the present embodiment, the plurality of discharge ports 60 are arranged in a row at or near the upper ends of the outer side surface 15 and the inner side surface 16. Therefore, the lubricating oil is efficiently supplied to the entire surface or nearly the entire surface of the outer side surface 15 and the inner side surface 16. From another perspective, the lubricating oil is quickly and uniformly supplied to the entire surface or nearly the entire surface of the outer side surface 15 and the inner side surface 16.

In addition, in the present embodiment, a plurality of tapered portions 63 are formed at equal intervals at the corners 61 and 62, and the discharge port 60 is provided on each of the tapered portions 63. Each tapered portion 63 is a slope spanning between the side surface (outer side surface 15, inner side surface 16) and the upper surface 17 of the partial rail 14a. Therefore, the lubricating oil that has overflown from the discharge ports 60 is smoothly guided to the outer side surface 15 and the inner side surface 16 by the slope of the tapered portions 63.

Note that it is clear that the outer side surface 15 and the inner side surface 16 of the partial rail 14a correspond to the outer side surface 15 and the inner side surface 16 of the rail 14 made up of the plurality of coupled partial rails 14a.

Here, the plurality of partial rails 14a constituting the rail 14 are coupled with their end surfaces butted together. From another perspective, the location where the end surfaces of the two partial rails 14a butt together is the joint between these partial rails 14a. Therefore, if measures are taken to prevent leakage of lubricating oil from the joint between the two partial rails 14a, the set screw 51a can be omitted. Also, the set screw 51a can be replaced with other sealing members such as rubber stoppers or plastic stoppers.

### <Modification of Partial Rail>

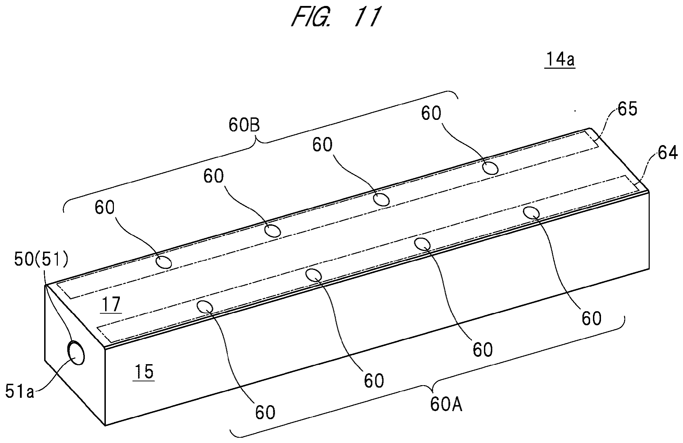

FIG. 11 is a perspective view showing a modification of the partial rail 14a. The partial rail 14a shown in FIG. 11 has the same basic structure as the partial rail 14a described above. However, the partial rail 14a shown in FIG. 11 has the discharge ports 60 provided at edge portions of the upper surface 17.

More specifically, the plurality of discharge ports 60 are provided on an edge portion 64 located on one side of the upper surface 17 in the width direction, and the plurality of discharge ports 60 are provided on an edge portion 65 located on the other side of the upper surface 17 in the width direction.

The four discharge ports 60 provided on the edge portion 64 are arranged in a row along the longitudinal direction of the partial rail 14a to form the discharge port group 60A. Also, the four discharge ports 60 provided on the edge portion 65 are arranged in a row along the longitudinal direction of the partial rail 14a to form the discharge port group 60B.

The partial rail 14a shown in FIG. 11 can form the rail 14, just like the partial rail 14a described above. Also, another partial rail identical to the partial rail 14a shown in FIG. 11 can form the rail 13.

In the foregoing, the invention made by the inventors of this application has been specifically described based on the embodiment and example. However, it is needless to say that the present invention is not limited to the embodiment or example described above and various modifications can be made within the range not departing from the gist of the present invention.

For example, the oil passage 50 and the discharge ports 60 may be provided in the sections other than the section of the heat setting region of the rails 13 and 14 or in all the sections including the section of the heat setting region. Understandably, the pitch P1 between the adjacent link mechanisms 11 is maximum in the heat setting region 20C. As a result, the force that the rails 13 and 14 receive from the guide rollers 41 and 42 is maximum in the section of the heat setting region. From another perspective, the section of the heat setting region of the rails 13 and 14 is the section where the rails 13 and 14 are most likely to wear.

Therefore, from the viewpoint of effectively suppressing the wear of the rails 13 and 14 at low cost, it is preferable to provide the oil passage 50 and the discharge ports 60 in the section of the heat setting region.

The number of discharge ports 60 and branch oil passages 52 can be increased or decreased as appropriate. In addition, the plurality of discharge ports 60 constituting the discharge port group or the discharge port row are not necessarily arranged at equal pitch.

In another embodiment, two branch oil passages 52 communicate with the main oil passage 51 at one location. In this case, the two branch oil passages 52 extend from the main oil passage 51 toward two different discharge ports 60 while being spaced apart from each other.

In another embodiment, a plurality of grooves are formed on the outer side surfaces 15 and the inner side surfaces 16 of the rails 13 and 14. More specifically, grooves inclined with respect to the longitudinal direction of the rails 13 and 14 are formed on the outer side surfaces 15 and the inner side surfaces 16 in all the sections or a certain section (for example, the section of the heat setting region) of the rails 13 and 14.

The grooves retain some of the lubricating oil that has overflown from the discharge ports 60 and spread onto the outer side surface 15 and the inner side surface 16. As a result, the lubricating oil remains on the outer side surfaces 15 and the inner side surfaces 16 of the rails 13 and 14 for a long period of time. In other words, an oil film is continuously formed on the surfaces of the rails 13 and 14 for a long period of time.

In another embodiment, the rail holders 24 are provided with rollers (support rollers) that move while being in contact with the upper surfaces 17 of the rails 13 and 14. In this case, the oil film formed by the lubricant sent to the discharge ports 60 through the oil passage 50 also contributes to suppressing wear of the rails 13 and 14 due to the contact with the support rollers.

In another embodiment, three guide rollers are provided on the rail holder 24. For example, an additional guide roller is provided in front of or behind the guide roller 41. The additional guide roller may partly overlap with the guide roller 41 in the radial direction.

### REFERENCE SIGNS LIST

1 thin-film manufacturing system
2 extrusion apparatus
3 T-die
4 raw sheet cooling apparatus
5 stretching machine
6 take-off apparatus
7 winder apparatus
8 resin film
9 heat treatment unit
10, 10R, 10L link device
11 link mechanism
13, 14 rail
13a, 14a partial rail
15 outer side surface
16 inner side surface
17 upper surface
18 lower surface
19a, 19b, 19c sprocket
20A preheating region
20B stretching region
20C heat setting region
21 clip
21a main body portion
21b grip portion
21c spring portion
22 upper link plate
23 lower link plate
24 rail holder
24a outer rail holder
24b inner rail holder
25 base member
31 roller holding portion
32 shaft
41, 42 guide roller
50 oil passage
51 main oil passage
51a set screw
52 branch oil passage
52A, 52B branch oil passage group
53 oil supply passage
60 discharge port
60A, 60B discharge port group
61, 62 corner
63 tapered portion
64 edge portion
70 supply port
L1, L2 separation distance
P1, P2 pitch

## Claims

1. A stretching machine configured to stretch a resin film, the stretching machine comprising:
a rail;
link mechanisms each provided with a plurality of rollers moving while being in contact with side surfaces of the rail;
an oil passage provided inside the rail; and
a plurality of discharge ports provided at corners between the side surfaces and an upper surface of the rail or on edge portions of the upper surface of the rail and arranged along a longitudinal direction of the rail,
wherein the oil passage includes a main oil passage and a plurality of branch oil passages extending obliquely with respect to the main oil passage from two or more different locations on the main oil passage, and
wherein lubricating oil supplied to the main oil passage is sent to the plurality of discharge ports through the plurality of branch oil passages.

2. The stretching machine according to claim 1,
wherein the oil passage includes an oil supply passage that connects the main oil passage and a supply port provided on a lower surface of the rail.

3. The stretching machine according to claim 1,
wherein the main oil passage and the branch oil passages are formed of through holes provided inside the rail.

4. The stretching machine according to claim 1, comprising:
a first discharge port group including the plurality of discharge ports provided at the corner between one of the side surfaces and the upper surface of the rail;
a second discharge port group including the plurality of discharge ports provided at the corner between the other of the side surfaces and the upper surface of the rail;
a first branch oil passage group including the plurality of branch oil passages which are arranged on one side of the main oil passage and communicate with the respective discharge ports belonging to the first discharge port group; and
a second branch oil passage group including the plurality of branch oil passages which are arranged on the other side of the main oil passage and communicate with the respective discharge ports belonging to the second discharge port group.

5. The stretching machine according to claim 1,
wherein a plurality of tapered portions spanning between the side surfaces and the upper surface of the rail are formed at the corners, and
wherein the discharge ports are provided at the tapered portions, respectively.

6. The stretching machine according to claim 1,
wherein the rail is made up of a plurality of partial rails coupled to each other, and
wherein the oil passage and the discharge ports are provided in the partial rail constituting a section of the rail.

7. The stretching machine according to claim 6,
wherein the section of the rail is a section in which the link mechanisms gripping the resin film after being stretched run.

8. A rail on which link mechanisms of a stretching machine run, the rail comprising:
side surfaces on which a plurality of rollers provided in the link mechanisms move while being in contact with them;
an oil passage provided inside; and
a plurality of discharge ports provided at corners between the side surfaces and an upper surface or on edge portions of the upper surface and arranged along a longitudinal direction of the rail,
wherein the oil passage includes a main oil passage and a plurality of branch oil passages extending obliquely with respect to the main oil passage from two or more different locations on the main oil passage, and
wherein lubricating oil supplied to the main oil passage is sent to the plurality of discharge ports through the plurality of branch oil passages.

9. The rail according to claim 8, the rail being made up of a plurality of partial rails coupled to each other,
wherein the oil passage and the discharge ports are provided in the partial rail forming a section in which the link mechanisms gripping a resin film after being stretched run.

10. A partial rail constituting a rail on which link mechanisms of a stretching machine run, the partial rail comprising:
side surfaces on which a plurality of rollers provided in the link mechanisms move while being in contact with them;
an oil passage provided inside; and
a plurality of discharge ports provided at corners between the side surfaces and an upper surface or on edge portions of the upper surface and arranged along a longitudinal direction of the rail,
wherein the oil passage includes a main oil passage and a plurality of branch oil passages extending obliquely with respect to the main oil passage from two or more different locations on the main oil passage, and
wherein lubricating oil supplied to the main oil passage is sent to the plurality of discharge ports through the plurality of branch oil passages.

11. The partial rail according to claim 10, constituting a section of the rail on which the link mechanisms gripping a resin film after being stretched run.

12. An oil film forming method for forming an oil film on a surface of a rail on which link mechanisms of a stretching machine run,
wherein lubricating oil is sent to a plurality of discharge ports provided at corners between side surfaces and an upper surface of the rail or on edge portions of the upper surface of the rail through an oil passage provided inside the rail.

13. The oil film forming method according to claim 12,
wherein the oil passage is made up of a main oil passage and a plurality of branch oil passages extending obliquely with respect to the main oil passage from two or more different locations on the main oil passage, and
wherein the lubricating oil supplied to the main oil passage is sent to the plurality of discharge ports through the plurality of branch oil passages.
